# EUROPÄISCHE PATENTANMELDUNG

(11) **EP 2 104 021 A2**
(43) Veröffentlichungstag der Anmeldung: **23.09.2009**
(21) Anmeldenummer: 09001434.1
(22) Anmeldetag: 03.02.2009
(51) Int. Cl.: G06F 3/033

(54) **Verfahren zur Bedienung einer mobilen Vorrichtung**

(30) Priorität: 20.03.2008 DE 102008015398
(71) Anmelder: Deutsche Telekom AG, 53113 Bonn (DE)
(72) Erfinder: Hasemann, Jörg-Michael, Dr., 27321 Emtinghausen (DE)

(57) **Zusammenfassung**

Verfahren zur Bedienung einer beweglichen Vorrichtung, insbesondere eines Mobiltelefons, mit einem Bildschirm und mit einer Kamera, wobei die Vorrichtung verschiedene Betriebsmodi aufweist, wobei in einem Kameramodus eine aktuelle Bildsequenz mit der Kamera aufgenommen, mittels einer Kamerafunktion verarbeitet und auf dem Bildschirm dargestellt werden kann, wobei in einem Normalmodus als digitale Dateien vorliegende Objekte umfassend Bild- und/oder Textinformation auf dem Bildschirm dargestellt werden,
wobei einen Bedienmodus vorhanden ist, in dem eine aktuelle Bildsequenz mit der Kamera aufgenommen und verarbeitet wird, während zeitgleich ein nicht in der Bildsequenz enthaltenes Objekt auf dem Bildschirm dargestellt wird, wobei innerhalb der Bildsequenz ein oder mehrere in Richtung und Länge definierte Bewegungsvektoren ermittelt werden, die eine anhand der Bildsequenz beschriebene Bewegung definieren, wobei das dargestellte Objekt in Korrelation zu dem oder den Bewegungsvektoren auf dem Bildschirm verändert wird.

## Beschreibung

Die Erfindung betrifft ein Verfahren zur Bedienung einer beweglichen Vorrichtung, insbesondere eines Mobiltelefons, mit einem Bildschirm und mit einer Kamera, wobei die Vorrichtung verschiedene Betriebsmodi aufweist, wobei in einem Kameramodus eine aktuelle Bildsequenz mit der Kamera aufgenommen, mittels einer Kamerafunktion verarbeitet und auf dem Bildschirm dargestellt werden kann, wobei in einem Normalmodus als digitale Dateien vorliegende Objekte umfassend Bild- und/oder Textinformation auf dem Bildschirm dargestellt werden. Zudem betrifft die Erfindung eine bewegliche Vorrichtung zur Umsetzung dieses Verfahrens.

Solche Mobiltelefone, Smartphones oder PDAs (nachfolgend zusammenfassend "Mobiltelefone") mit relativ großem Bildschirm, auf dem sich eine komfortable Menüführung umsetzen lässt, sind seit längerer Zeit bekannt. Ebenfalls bekannt ist es, diese Art von Mobiltelefonen mit einer Kamerafunktionalität auszustatten, die es erlaubt, Bilder und/oder Bildsequenzen aufzunehmen und diese zu speichern respektive mittels eines Nachrichtendienstes, wie MMS, zu verschicken. Entsprechend können auf den recht hochauflösenden Bildschirmen dieser Mobiltelefone Bilder, Grafiken, Texte oder andere Objekte, wie Tabellen oder über das Internet abgerufene Webseiten mit Bildern und Text, dargestellt werden.

Problematisch ist jedoch die Ansicht solcher Objekte, wenn diese über die Darstellungsmöglichkeiten oder die Bildschirmgröße und/oder Auflösung hinaus gehen. In diesem Fall muss der Nutzer sich mittels der Bedienung durch Funktionstasten oder entsprechender Elemente innerhalb der Objekte bewegen ("scrollen"). Diese Art der Navigation innerhalb der grafischen Anzeigen ist kompliziert und umständlich. Weitere Beispiele für die unergonomische Bedienung sind Kartenansichten, da trotz der recht hohen Auflösung der Bildschirme heutiger Mobiltelefone nur Ausschnitte der Karten dargestellt werden können. Bei der Nutzung des Kartenmaterials muss daher zwangsläufig der gerade dargestellte Kartenausschnitt geschwenkt oder es muss hinein- respektive herausgezoomt werden. Üblicherweise geschehen auch diese Bewegungen mittels vorgesehener Pfeiltasten, eines Micro-Joysticks oder anderer definierter Tasten.

Die Aufgabe der vorliegenden Erfindung liegt nunmehr darin, ein Verfahren für die Bedienung im Hinblick auf die Darstellung von Information auf solchen Bildschirmen zu schaffen, das sich einfach umsetzen lässt und das einen erhöhten Nutzerkomfort bietet. Zudem ist es Aufgabe der Erfindung ein Endgerät zur Umsetzung des Verfahrens vorzuschlagen.

Diese Aufgaben werden durch das Verfahren mit den Merkmalen des Anspruch 1, und das Endgerät nach Anspruch 8 gelöst. Vorteilhafte Ausführungsformen sind in den jeweiligen Unteransprüchen genannt.

Der wesentliche Grundgedanke liegt in einem besonderen Betriebsmodus, der nachfolgend als Bedienmodus bezeichnet wird. Dieser nutzt einerseits einen Teil des Kameramodus, nämlich die Aufnahme- und Verarbeitungsmöglichkeit, arbeitet aber andererseits bezüglich der Darstellung im Normalmodus. Der Kern der Erfindung ist nunmehr, dass eine mit der Kamera aufgenommene "reale" Bewegung in eine Bewegung innerhalb des auf dem Bildschirm dargestellten "virtuellen" Objektes umgewandelt wird. Anders ausgedrückt wird die Bewegung innerhalb einer von der Kamerafunktion aufgenommenen Bildsequenz in das auf dem Bildschirm dargestellte Objekt, das von der aktuellen Bildsequenz völlig unabhängig ist, transferiert.

Dabei kann die aus der aufgenommenen Bildsequenz ermittelte Bewegung auf ein Schwenken und/oder ein Rotieren und/oder auf eine Vorwärts-Rückwärtsbewegung der Vorrichtung und damit der Kamera zurückzuführen sein. Eine reale Vorwärts-Rückwärtsbewegung kann auch durch einen Zoom mit der Kamera, also durch eine "virtuelle" Vorwärts-Rückwärtsbewegung, ersetzt werden. Eine entsprechende Bewegung wird auf dem Bildschirm im Verhältnis zu dem dort dargestellten Objekt nachvollzogen. Für den Nutzer scheint es so, als würde er eine Bildsequenz von dem auf dem Bildschirm dargestellten "virtuellen" Objekt aufnehmen. Auf diese Weise kann sich der Nutzer in das Objekt, beispielsweise ein Bild oder ein Kartenausschnitt, hinein- oder aus dem Objekt herauszoomen. Er kann auch zu den nicht dargestellten Teilen des Objektes schwenken und/oder scrollen, sich alos nach links, rechts, oben und/oder unten navigieren. Er hat also im Bedienmodus die Möglichkeit, sich zu Bereichen des ausgedehnten Objektes zu bewegen, die ihm bis dahin hinter dem Bildschirmrand verborgen waren.

Eine solchermaßen analysierte Bewegung kann nicht nur dazu genutzt werden, um ein Scrollen auf dem Bildschirm zu verursachen, sie kann auch dazu eingesetzt werden, um das dargestellte und gegebenenfalls gescrollte Objekt gegenüber einem auf dem Bildschirm ortsfest angeordneten Mauszeiger zu bewegen. Liegt das gewünschte Feld "unter" dem Mauszeiger, kann der Mausklick durchgeführt und die gewünschte Funktion aktiviert werden. Auf diese Weise kann eine Menusteuerung realisiert werden, die insbesondere nur zwei Tasten, nämlich eine zum Aktivieren der Bewegungsfunktion und eine zum "Klicken", benötigt.

Im Rahmen der erfindungsgemäßen Vorgehensweise werden aus mehreren respektive aus vielen ermittelten Bewegungsvektoren von aufeinander folgenden Bildern einer Bildsequenz ein möglichst genauer ermittelt wird. Dabei können falsche erkannt und ausgeschlossen werden, wobei über den Rest gemittelt werden kann.

Diese Erfindung lässt sich besonders vorteilhaft umsetzen bei Mobiltelefonen, die auf der Vorderseite einen Bildschirm und auf der Rückseite eine Kamera haben. Erfindungsgemäß ist für solche Geräte der spezielle Bedienmodus vorgesehen, bei dem die Anzeige auf dem Bildschirm von der Aufnahme der Kameraentkoppelt ist. Wie schon dargelegt, wird in diesem Bedienmodus eine aktuelle Bildsequenz mit der Kamera aufgenommen und verarbeitet, während auf dem Bildschirm zeitgleich ein Objekt, beispielsweise ein langer Text, Karten- oder Bildmaterial oder eine große Webseite, dargestellt wird, das nichts mit der Bildsequenz zu tun hat. Nun werden anhand der Bildsequenz ein oder mehrere Bewegungsvektoren ermittelt, die einen von der Bildsequenz beschriebenen Bewegungsablauf charakterisieren. Bei den Bewegungsvektoren handelt es sich insbesondere um Vektoren, die identische Punkte innerhalb bestimmter innerhalb der Bildsequenz befindlicher Gegenstände verbinden. Um beispielsweise Vorwärts-/Rückwärtsbewegungen zu erkennen sind mehrere Bewegungsvektoren erforderlich. Diese sind nicht identisch mit der aus ihnen abgeleiteten Bewegung des Mobiltelefons respektive der Steuerungsinformation für die Bildschirmdarstellung. Aus den Bewegungsvektoren wird jedoch eine "Bewegung" innerhalb des dargestellten Objektes generiert. In Korrelation zu dem oder den ermittelten Bewegungsvektoren wird also das dargestellte Objekt auf dem Bildschirm bewegt. Auch wenn nicht zwangsläufig notwendig, so ist es doch besonders vorteilhaft, wenn die Korrelation eine direkte Korrelation ist, wenn also die Bewegung auf dem Bildschirm unmittelbar der von der Kamera aufgenommenen Bewegung entspricht.

In einer vorteilhaften Ausführungsform wird diese Idee realisiert, indem mittels der integrierten Kamera im Bedienmodus kontinuierlich Bilder für die Bildsequenz aufgenommen werden, wobei die Bewegungsvektoren anhand geometrischer Analyse aus zwei oder mehr zeitlich aufeinander folgenden Bildern ermittelt werden. Bewegungsvektoren können dabei insbesondere solche Vektoren sein, die zwei identische und insbesondere automatisch aufgefundene Bildelemente, nachfolgend auch "Features" genannt, in den zeitlich aufeinander folgenden Bildern verbinden. Auf diese Weise lassen sich Bewegungsvektoren mit großer Genauigkeit ermitteln, deren Muster sowohl Schwenks nach oben, nach unten, nach links und nach rechts, sowie Vorwärts- und Rückwärtsbewegungen erkennen lassen.

Vorteilhafterweise kann der Bedienmodus unter einem Menüpunkt aus dem Normalmodus heraus durch einen Start/Stop-Befehl aktiviert und entsprechend deaktiviert werden. In einem besonders einfachen Fall kann der Start/Stop-Befehl dabei durch das Drücken und Loslassen einer besonders markanten und für den Nutzer gut auffindbaren Befehlstaste gegeben werden. Generell ist es besonders vorteilhaft, dass sich das erfindungsgemäße Bedienkonzept relativ einfach auf Designs bekannter Mobiltelefone übertragen lässt. Insbesondere stellen Bedienkonzepte auf Mobiltelefonen ehedem in den meisten Fällen vier Pfeiltasten und eine Aktivierungstaste zur Verfügung, so dass solche Mobiltelefone für den erfindungsgemäßen Einsatz geradezu prädestiniert sind.

Zudem ist es vorteilhaft, für schlechte Lichtverhältnisse, insbesondere für Dunkelheit, eine im Mobiltelefon integrierte Lichtquelle, beispielsweise eine LED, vorzusehen, die im Bedarfsfall eingeschaltet werden kann.

In einer vorteilhaften Ausführungsform wird vorgeschlagen, nicht nur die Art der Bewegung in den sechs Richtungen zur interpretieren, sondern den Richtungsvektor der Bewegung des Mobiltelefons zu ermitteln und als Steuerungsinformation zu verwenden. Dieser Richtungsvektor des Mobiltelefons ist die Kombination der Bewegung, beispielsweise ein gleichzeitiges Zoomen und Schwenken zur Seite bezogen auf das im Display dargestellten Objekt.

Nachfolgend wird die Erfindung anhand der Figuren 1 bis 4 näher erklärt. Dabei zeigen:
- **Figur 1**: Bewegungsvektoren aus einer Schwenkbewegung,
- **Figur 2**: Bewegungsvektoren aus einer Zoom-Bewegung,
- **Figur 3**: ein Flussdiagramm zur Berechnungssystematik und
- **Figur 4**: eine Bewegung in der Darstellung einer Karte.

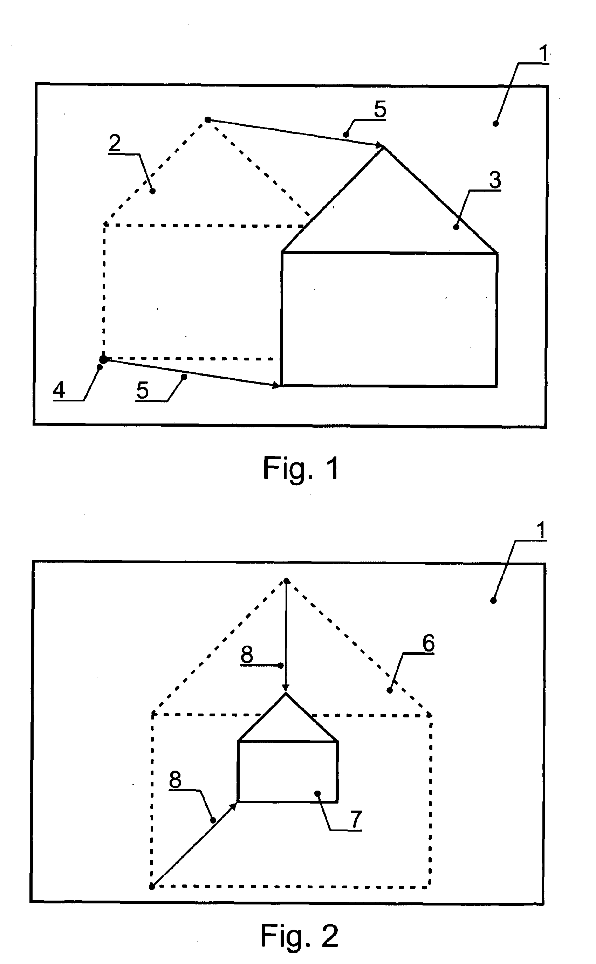

In Figur 1 und Figur 2 ist das prinzipielle Vorgehen bei der Extraktion von Bewegungsvektoren angedeutet. Gezeigt ist das Sichtfenster 1 einer Kamera, wie es sich für den Nutzer darstellten würde, wenn sich sein Mobiltelefon im Kameramodus befände. Im Fall von Figur 1 hatte der Nutzer die Kamera seines Mobiltelefons ursprünglich auf ein Haus gerichtet und dann die Kamera geschwenkt. Erfindungsgemäß verfolgt der Nutzer den Schwenk nicht anhand der Darstellung des Hauses, sondern anhand eines anderen als digitale Datei vorliegenden Objektes, beispielsweise einer großformatigen Landkarte, die auf seinem Bildschirm dargestellt ist. Aus dem Schwenk lassen sich jedoch Bewegungsvektoren extrahieren, die dann auf die Darstellung auf dem Bildschirm übertragen werden.

Durch den Schwenk der Kamera "wanderte" das Haus aus Position 2 in diesem Fall von der linken Hälfte des (virtuellen) Fensters 1 ein wenig nach rechts unten zur Position 3. Gemäß der Erfindung ist auf dem Mobiltelefon eine Funktion realisiert, die markante Punkte des Hauses, hier die Ecken 4 findet. Nach dem Schwenk sind die Ecken 4 um die in Länge und Richtung definierten Bewegungsvektoren 5 innerhalb des Fensters 1 gewandert. Die ermittelten Bewegungsvektoren 5 werden dann an die Nutzerschnittstelle weitergegeben, wo sie als Bewegungsinformation genutzt werden.

In Figur 2 ist eine ähnliche Situation dargestellt, wobei die Aufnahme des Hauses jedoch von der ursprünglichen Darstellung 6 in die aktuelle Darstellung 7 (weg) gezoomt wird. Auch aus diesem Zoom ergeben sich Bewegungsvektoren 8, die für die Umsetzung des Verfahrens genutzt werden können. Dabei kann sich dieser Zoom auch durch eine Rückwärtsbewegung des Nutzers ergeben. Die ermittelten Bewegungsvektoren 8 werden wiederum als Bewegungsinformation an die Nutzerschnittstelle weitergegeben.

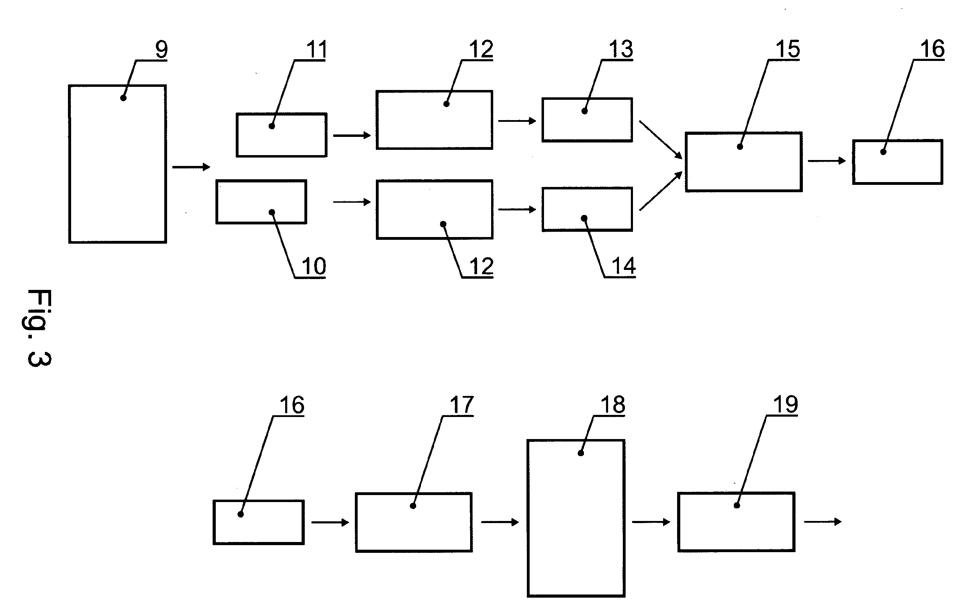

Eine mögliche Verarbeitungskette der Information ist in Figur 3 veranschaulicht. Die Verarbeitungskette verläuft Von der kontinuierlichen Aufnahme von Bildern mittels der in das Mobiltelefon eingebauten Kamera, über die fortwährende Interpretation von Bewegungsvektoren und der Generierung von Steuerungsinformationen für die Nutzerschnittstelle. Die Kette endet mit der Nutzung dieser Information in der Nutzerschnittstelle des Mobiltelefons respektive in der darauflaufenden Anwendungen einer Kartendarstellung. Dabei werden mit einer Kamera 9 ein Bild 10 zum Zeitpunkt t und ein Bild 11 zum Zeitpunkt t+1 aufgenommen. Beide Bilder werden jeweils von einer Funktion zur Feature Extraktion 12 auf markante Punkte analysiert. Im Resultat ergeben sich die Features 13 und 14 (im obigen Beispiel die Ecken 5). Die Lage der markanten Punkte wird in der Funktion 15 verglichen, wobei aus dem Vergleich nachfolgend die Bewegungsvektoren 16 berechnet werden.

Im unteren Teil der Darstellung ist gezeigt, dass die Bewegungsvektoren 16 durch eine weitere Funktion 17 interpretiert und in eine Bewegung 18, insbesondere in "hoch", "runter", "links", "rechts", "hin", "weg", transferiert werden. Diese Bewegung stehen an der Nutzerschnittstelle 19 zur Verfügung, wo auch Aktionen des Nutzers eingehen.

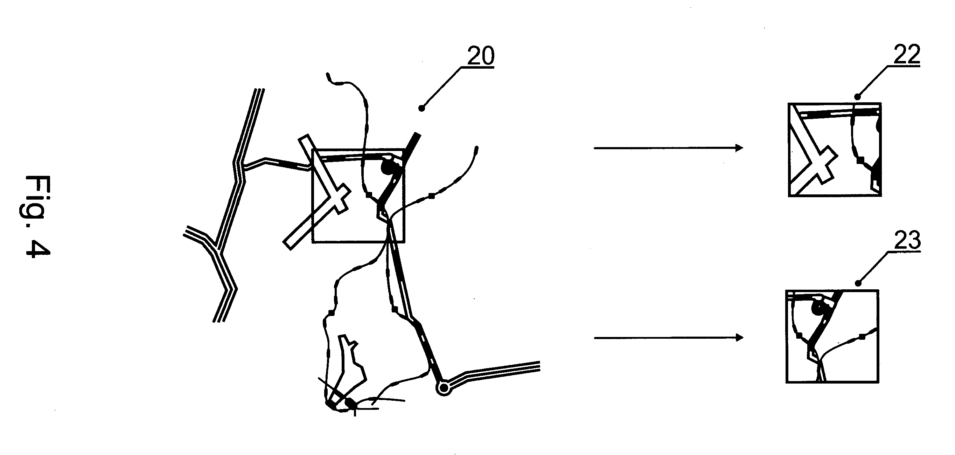

An Hand von Figur 4 wird diese Vorgehensweise nachfolgend am Beispiel der Darstellung geographischen Kartenmaterials verdeutlicht. Dabei wird die Bewegungsinformation wie folgt genutzt:

Auf der linken Seite von Figur 4 ist eine Straßenkarte 20 dargestellt, von der ein Ausschnitt 21 herausgegriffen ist. Dieser Ausschnitt 21 wird zunächst auf dem Bildschirm des Nutzers dargestellt. Der Nutzer nimmt mit der im Mobiltelefon befindlichen Kamera die Umgebung, beispielsweise das Haus aus den Figuren 1 und 2, auf. Nun macht der Nutzer mit seinem im Bedienmodus befindlichen Mobiltelefon eine Vorwärtsbewegung oder zoomt das aktuelle Bild heran. Aus den aufeinanderfolgenden Bildern werden die Bewegungsvektoren ermittelt und an die Nutzerschnittstelle weitergegeben. Das Ergebnis der "herangezoomten" Darstellung der Karte ist auf der rechten Seite in der oberen Darstellung 22 ersichtlich. Ähnliches gilt für den Schwenk mit der Kamera nach rechts, bei dem der dargestellte Kartenausschnitt (sofern möglich) entsprechend nach rechts, im allgemeinen nach Osten, verschoben wird. Die Darstellung auf dem Bildschirm des Mobiltelefons ist im Ausschnitt 23 ersichtlich.

Die Gültigkeit der Bewegungsinformation kann den Nutzer per Tastendruck signalisiert werden. Die Bewegungsinformation wird damit nur dann als Steuerungsinformation für das Userinterface verwendet, wenn gleichzeitig eine bestimmte Taste gedrückt wird. Das ist sinnvoll, da der menschliche Arm nur endlich lang ist und im ausgestreckten Zustand kein weiteres Hineinzoomen möglich wäre. Im Grunde entspricht dies dem Hochnehmen und Zurücksetzen der Maus am PC, wenn man beim Navigieren mit der Maus am Ende des Kabels, des Tisches oder des Mousepad angekommen ist. Ist also der Arm ausgestreckt und der Nutzer will weiter in die Karte hineinzoomen, so lässt er die Taste los, führt das Mobiltelefon wieder zum Körper, drückt die Taste und führt das Mobiltelefon von sich weg, wodurch es zu einem weiteren Hineinzoomen in die Karte kommt.

Dieses Vorgehen lässt sich auf Mindmaps abbilden, wobei das Hineinzoomen dem Aufklappen von Zweigen und das Herauszoomen dem Einklappen von Zweigen entspricht. Da Mindmaps Baumstrukturen haben, lassen sich äquivalent so auch Menustrukturen darstellen. Eine mit dem Auswählen einer Aktion belegte Taste des Mobiltelefons komplettiert ein auf obige Steuerungsinformationen basierendes Verfahren zur Navigation in Menustrukturen.

## Patentansprüche

1. Verfahren zur Bedienung einer beweglichen Vorrichtung, insbesondere eines Mobiltelefons, mit einem Bildschirm und mit einer Kamera, wobei die Vorrichtung verschiedene Betriebsmodi aufweist, wobei in einem Kameramodus eine aktuelle Bildsequenz mit der Kamera aufgenommen, mittels einer Kamerafunktion verarbeitet und auf dem Bildschirm dargestellt werden kann, wobei in einem Normalmodus als digitale Dateien vorliegende Objekte umfassend Bild- und/oder Textinformation auf dem Bildschirm dargestellt werden,
**gekennzeichnet, durch**
einen Bedienmodus, in dem eine aktuelle Bildsequenz mit der Kamera aufgenommen und verarbeitet wird, während zeitgleich ein nicht in der Bildsequenz enthaltenes Objekt auf dem Bildschirm dargestellt wird, wobei innerhalb der Bildsequenz ein oder mehrere in Richtung und Länge definierte Bewegungsvektoren ermittelt werden, die eine anhand der Bildsequenz beschriebene Bewegung definieren, wobei das dargestellte Objekt in Korrelation zu dem oder den Bewegungsvektoren auf dem Bildschirm verändert wird.

2. Verfahren nach Anspruch 1,
**dadurch gekennzeichnet,**
**dass** die Korrelation eine direkte Korrelation ist, wobei die Bewegung auf dem Bildschirm der von der Kamera aufgenommenen Bewegung unmittelbar entspricht.

3. Verfahren nach Anspruch 1 oder 2,
**dadurch gekennzeichnet,**
**dass** der Bedienmodus aus dem Normalmodus heraus durch einen Start/Stop-Befehl aktiviert und entsprechend deaktiviert wird.

4. Verfahren nach Anspruch 3,
**dadurch gekennzeichnet,**
**dass** der Start/Stop-Befehl durch das Drücken und wieder Loslassen einer Befehlstaste gegeben wird.

5. Verfahren nach einem der vorherigen Ansprüche,
**dadurch gekennzeichnet,**
**dass** die Bewegungsvektoren automatisch ermittelt werden, wobei ein Analyseprogramm eines oder mehrere Bildelemente identifiziert und diese in zeitlich aufeinander folgenden Bildern zu einem Bewegungsvektor verbindet.

6. Verfahren nach einem der vorherigen Ansprüche,
**dadurch gekennzeichnet,**
**dass** mit der Bewegung des dargestellten Objektes ein "Scrollen" innerhalb des über den Bildschirmrand hinausreichenden Objektes realisiert wird.

7. Verfahren nach einem der vorherigen Ansprüche,
**dadurch gekennzeichnet,**
**dass** auf dem Bildschirm ein Mauszeiger eingeblendet wird, wobei die Bewegung das dargestellte Objekt unter dem Mauszeiger verschiebt.

8. Bewegliche Vorrichtung, insbesondere Mobiltelefon, zur Durchführung des Verfahrens nach einem der vorherigen Ansprüche,
**gekennzeichnet durch**
einen Bedienmodus zur Aufnahme und Verarbeitung einer aktuellen Bildsequenz mittels der Kamera, wobei zeitgleich ein nicht in der Bildsequenz enthaltenes Objekt auf dem Bildschirm erscheint, wobei eine Bewegung der im Bedienmodus befindlichen Vorrichtung das dargestellte Objekt in Korrelation zu der Bewegung auf dem Bildschirm verändert.
